# EUROPÄISCHE PATENTANMELDUNG

(11) **EP 1 634 744 A2**
(43) Veröffentlichungstag der Anmeldung: **15.03.2006**
(21) Anmeldenummer: 05011976.7
(22) Anmeldetag: 03.06.2005
(51) Int. Cl.: B60J 5/04, E05D 15/30

(54) **Boden des Einstiegs eines Türportals eines Busses oder eines schienengebundenen Fahrzeugs**

(30) Priorität: 09.09.2004 DE 102004043577
(71) Anmelder: HÜBNER GmbH, 34123 Kassel (DE)
(72) Erfinder: Paul, Oliver, 38302 Wolfenbüttel (DE); Kunze, Hans, 34121 Kassel (DE)
(74) Vertreter: WALTHER, WALTHER & HINZ Patentanwälte - European Patent Attorneys

(57) **Zusammenfassung**

Gegenstand der Erfindung ist ein Boden (2) des Einstiegs eines Türportals (1) eines Busses oder eines schienengebundenen Fahrzeugs, wobei der Boden (2) zum Fahrzeuginnern (Pfeil 9) zu ansteigend ausgebildet ist, wobei zum Verschließen des Türportals eine ein- oder mehrflüglige Schwenktür vorgesehen ist, wobei der mindestens eine Türflügel der Schwenktür an einer Drehsäule (3) gelagert ist, wobei die Drehsäule mindestens einen Schwenkarm aufweist, wobei der mindestens eine Schwenkarm (10) unten am Türflügel (4), insbesondere an der Unterkante des Türflügels (4) angreift, wobei der Boden (2) des Einstiegs im Schwenkbereich des Türflügels (4) eine sich über die Oberseite des Bodens (2) erstreckende Ausnehmung (6) aufweist.

## Beschreibung

Die Erfindung betrifft den Boden eines Einstiegs eines Türportals eines Busses oder eines schienengebundenen Fahrzeugs, wobei der Boden zum Fahrzeuginnern zu ansteigend ausgebildet ist, wobei zum Verschließen des Türportals eine ein- oder mehrflüglige Schwenktür vorgesehen ist, wobei der mindestens eine Türflügel der Schwenktür an einer Drehsäule gelagert ist, wobei die Drehsäule mindestens einen Schwenkarm aufweist, wobei der mindestens eine Schwenkarm unten am Türflügel, insbesondere an der Unterkante angreift (z. B. EP 1 118 491 A2).

Bei Fahrzeugen des öffentlichen Personenverkehrs, also insbesondere z. B. Bussen, ist ein Türportal vorgesehen, im welchem eine ein- und zweiflüglige Schwenktür vorgesehen ist. Der Boden ist im Bereich des Einstiegs leicht ansteigend ausgebildet, um zu verhindern, dass sich im Bereich des Einstiegs Wasser ansammelt (EP 1 118 491 A2).

Im Folgenden wird unter dem Boden des Einstiegs eines Türportals sowohl der eigentliche Boden des Fahrzeugs verstanden, aber auch eine Einstiegsstufe, die vom eigentlichen Boden nach unten hin abgesetzt ist, wie dies üblicherweise bei Bussen der Fall ist.

Darüber hinaus sind Schwenktüren verschiedenster Art bekannt, so insbesondere Außenschwenktüren, Innenschwenktüren und auch Schwenkschiebetüren. Die vorliegende Erfindung erfährt ihren Einsatz insbesondere bei Innenschwenktüren.

Wie bereits ausgeführt, steigt der Boden des Einstiegs zum Inneren des Fahrzeugs leicht an. Durch die Tür soll das Fahrzeuginnere gegen Umwelteinflüsse und insbesondere gegen Eindringen von Wassers geschützt sein. Um insofern bei einer Innenschwenktür, bei der der Türflügel über die Oberfläche des Einstiegs hinwegstreicht, im geschlossenen Zustand des Türflügels einen dichten Abschluss zu gewährleisten, ist nach einem bekannten Stand der Technik vorgesehen, dass der Türflügel an seiner Unterkante ein Gummiband aufweist, das bei der Schwenkbewegung des Türflügels abklappt. Nachteilig hierbei ist, dass bei höheren Geschwindigkeiten das Gummiband anfängt zu flattern und auf Dauer auch einreißt. Des Weiteren ist ein Abschluss mit Hilfe eines solchen Gummibandes nicht dicht, da zum Einen zwischen der Unterkante des Türflügels und dem Gummiband und andererseits zwischen dem Gummiband und dem Boden ein Spalt besteht, durch den Wasser eindringt.

Darüber hinaus ist ein Stand der Technik bekannt, bei dem an der unteren Kante des Türflügels eine Klappe aus einem Gummiprofil angeordnet ist.

Die Verbindung zwischen dem Gummiprofil und dem Türflügel erfolgt hierbei durch ein Filmscharnier. Nachteilig hierbei ist, dass die Klappe beim Einschwenken der Tür immer über den unteren Tragarm des Türflügels schleift, was zu einem nicht unerheblichen Verschleiß zum Einen an der Klappe, zum Anderen aber auch an dem Tragarm führt.

Der Erfindung liegt daher die Aufgabe zugrunde, den Einstieg eines Türportals eines Fahrzeugs, insbesondere eines Busses, derart auszubilden, dass zum Einen ein im Wesentlichen dichter Abschluss bei geschlossenem Türflügel gewährleistet ist, und zum Anderen der Verschleiß minimiert ist.

Die Aufgabe wird erfindungsgemäß dadurch gelöst, dass der Boden des Einstiegs im Schwenkbereich des Türflügels eine sich über die Oberseite des Bodens erstreckende Ausnehmung aufweist. Hieraus wird deutlich, dass der Abstand zwischen der unteren Kante des Türflügels und dem Boden im Bereich der Ausnehmung, die auch als Einlauftasche bezeichnet werden kann, immer konstant bleibt. Dies ermöglicht die Anbringung einer Bürstenleiste an der Unterkante des Türflügels, um so das Innere des Fahrzeugs ausreichend gegen eindringende Feuchtigkeit zu schützen. Im Falle einer zweiflügligen Tür ist selbstverständlich, dass eine solche Ausnehmung oder Einlauftasche jedem Türflügel zugeordnet ist. Wesentlich hierbei ist jedoch, dass auch bei einer zweiflügligen Tür zwischen den beiden Ausnehmungen oder Einlauftaschen der Einstieg noch genügend breit ist, so dass Personen ohne über die Stufe der Ausnehmung zu stolpern, in das Fahrzeuginnere gelangen können. Denn es hat sich herausgestellt, dass die Mehrzahl der Passagiere den Einstieg mittig vornimmt.

Im Einzelnen ist vorgesehen, dass die Höhe der Ausnehmung zum Fahrzeuginneren zunehmend ist, so dass die Oberfläche der Ausnehmung im Wesentlichen waagerecht bzw. rechtwinklig zur Drehsäule verlaufend ausgebildet ist, was bedeutet, wie bereits an anderer Stelle erläutert, dass der Abstand zwischen der Unterkante des Türflügels und des Einstiegs im Bereich der Ausnehmung im Wesentlichen konstant bleibt. Vorteilhaft ist weiterhin, wenn der Verlauf der ansteigenden Kante der Ausnehmung in etwa dem Bewegungsverlauf des Schwenkarmes des Türflügels entspricht. Das heißt, dass die Ausnehmung selbst nur eine Größe aufweist, die absolut notwendig ist, um den Türflügel von seiner Geschlossenstellung in seine Offenstellung zu überführen.

In Offenstellung des Türflügels der Schwenktür überdeckt der Türflügel einen Teil der Ausnehmung, so dass die Gefahr des Stolperns weitgehend vermieden ist, wobei hinzukommt, dass das Fahrzeug besteigende Personen im Wesentlichen immer in der Mitte des Einstiegs eintreten. Bis hierhin reicht allerdings die Ausnehmung nicht.

Wie bereits an anderer Stelle erläutert, weist der Türflügel eine Bürstenleiste auf. Diese Bürstenleiste ist an dem Türflügel an seiner Unterkante als Abschluss angeordnet. Im Einzelnen ist vorgesehen, dass die Bürstenleiste vertikal geteilt ausgebildet ist, und der eine Bürstenleistenteil im Bereich der Anlenkung des Schwenkarms an dem Türflügel um eine vertikale Achse klappbar, insbesondere um ca. 180° klappbar ausgebildet ist.

Aus dem Stand der Technik ist bekannt, dass eine Abschlussleiste an der Unterseite des Türflügels vorgesehen ist, die über den Schwenkarm streicht. Dies führt zu dem bekannten Verschleiß nicht nur am Schwenkarm, sondern auch an der Abschlussleiste. Durch die Abklappbarkeit der Bürstenleiste im Bereich der Anlenkung des Schwenkarms an Türflügel wird nun erreicht, dass dieser Teil der Bürstenleiste nicht mehr in Kontakt mit dem Schwenkarm gelangt, sondern diesem quasi nachgeführt ist, und was wesentlich ist, im Bereich der Ausnehmung oder auch Einlauftasche genannt, entlanggeführt wird.

Vorteilhaft ist hierbei vorgesehen, dass der klappbare Bürstenleistenteil mit seinem äußeren Ende schwenkbeweglich am Wagenkasten befestigt ist. Hieraus wird deutlich, dass der klappbare Bürstenleistenteil an beiden Enden vorzugsweise ein Gelenk in Form eines Scharniers aufweist. Um die Klappbarkeit des Büstenleistenteils zu gewährleisten, ist vorgesehen, dass der klappbare Teil der Bürstenleiste an seiner Oberkante nicht mit dem Türflügel verbunden ist.

Dem Ziel, die Ausnehmung bzw. auch Einlauftasche genannt möglichst klein zu halten, dient auch, dass der Schwenkarm außerhalb der Mittellängsachse des Türflügels in Richtung auf die Drehsäule zu an dem Türflügel angreift. Denn hierdurch wird erreicht, dass bei Verschwenken des an der Drehsäule angeordneten Schwenkarmes der Türflügel quasi eingezogen eingeschwenkt wird. Das bedeutet, dass der Türflügel an seiner Hauptabschließkante während seines Übergangs von der Offenstellung in die Geschlossenstellung immer im Bereich der Außenkante des Wagenkastens verbleibt. Insofern ist auch vorgesehen, dass der Schwenkarm drehbeweglich mit dem Türflügel verbunden ist.

Anhand der Zeichnungen wird die Erfindung nachstehend beispielhaft näher erläutert.
- Figur 1: zeigt das Türportal beispielsweise eines Busses oder schienengebundenen Fahrzeuges für eine zweiflüglige Schwenktür, wobei jedoch lediglich ein Flügel dargestellt ist, der durch eine Drehsäule verschwenkbar angetrieben ist;
- Fig. 2: zeigt die Ansicht von innen auf den unteren Teil des Türflügels mit Schwenkarm und Drehsäule;

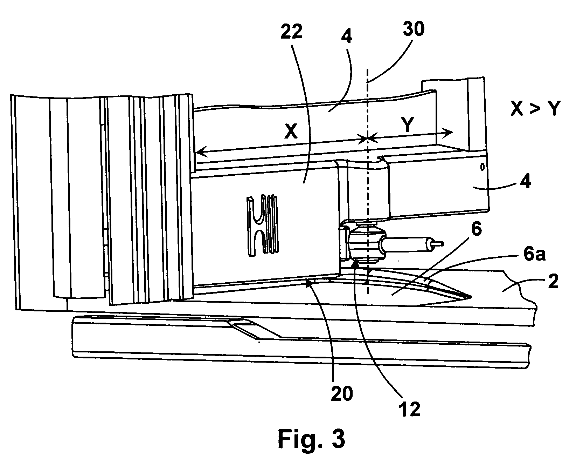

- Fig. 3: zeigt eine Ansicht von außen auf den unteren Teil der Schwenktür in teilweise geöffneter Position;
- Fig. 4: zeigt eine Ansicht auf den Türflügel in geöffneter Position;
- Fig. 5a-d: zeigen den Verlauf des Türflügels von seiner Geschlossenstellung in seine Offenstellung.

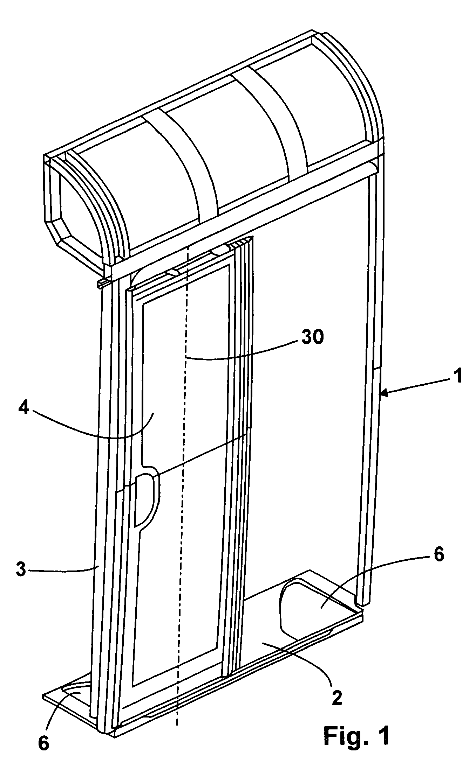

Gemäß Figur 1 ist das Türportal des Fahrzeugs mit 1 gekennzeichnet. Das Türportal 1 umgibt die Einstiegsstufe 2, wobei das Türportal selbst ebenfalls noch die Drehsäule 3 besitzt, die den Türflügel oben und unten durch entsprechende Schwenkarme ergreift. Im Bereich eines jeden Türflügels befindet sich auf der Stufe die Ausnehmung 6. Die Einstiegsstufe 2 ist zum Inneren (Pfeil 9) des Fahrzeugs leicht ansteigend ausgebildet. Insofern bildet sich am Rand der Ausnehmung im Boden zum Fahrzeuginneren zu, die ansteigende Kante 6a.

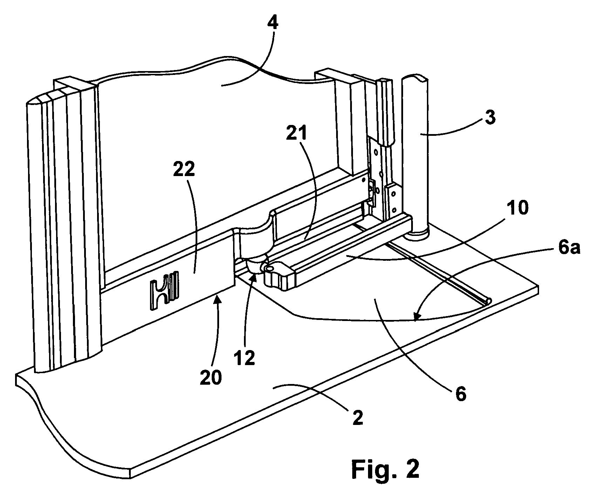

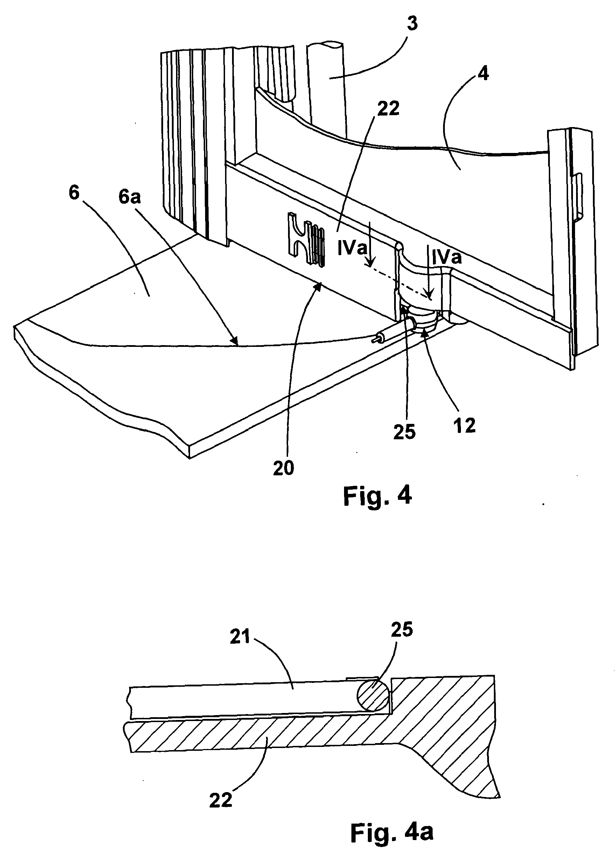

Wie bereits erläutert, zeigt die Figur 2 eine Ansicht von innen auf den unteren Teil des Türflügels; die mit 2 bezeichnete Einstiegsstufe besitzt die Ausnehmung 6, die auch als Einlauftasche bezeichnet werden kann, wobei im Bereich der Einstiegsstufe 2 die Drehsäule 3 vorgesehen ist, an der der Schwenkarm 10 angeordnet ist, der gelenkig bei 12 mit der Unterkante des Türflügels 4 verbunden ist. An der Unterseite des Türflügels 4 befindet sich die mit 20 bezeichnete Bürstenleiste. Die mit 20 bezeichnete Bürstenleiste besteht aus zwei Bürstenleistenteilen 21 und 22. Der Bürstenleistenteil 21 ist mit dem Bürstenleistenteil 22 durch eine vertikale Achse 25 verbunden, die erlaubt, dass das Bürstenleistenteil 21 um ca. 180° Grad verschwenkt auf die Rückseite des Bürstenleistenteils 22 geklappt werden kann, wenn der Türflügel sich in Offenstellung befindet (Figur 4).

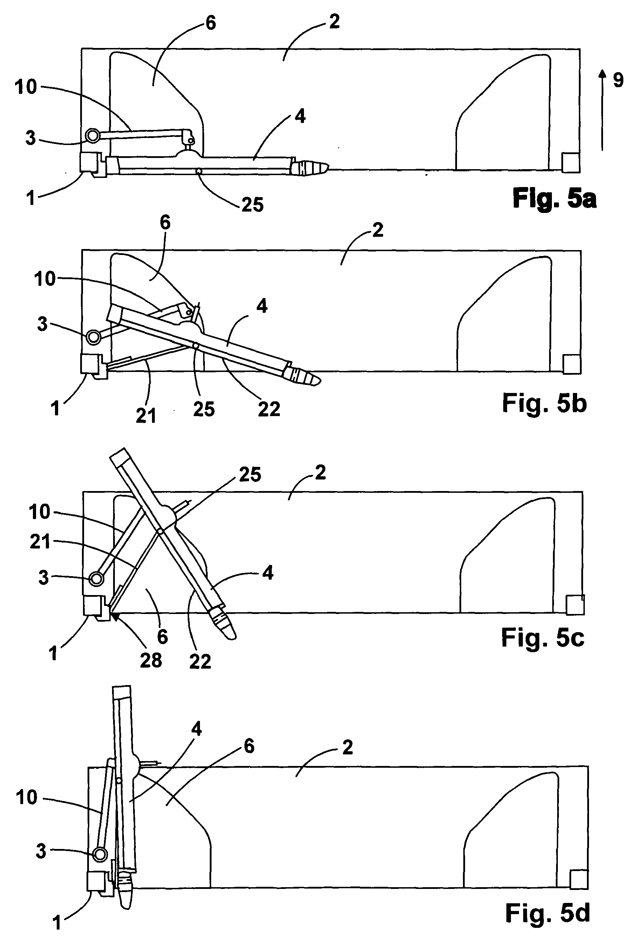

Den Verlauf der Öffnung des Türflügels 4 von seiner Geschlossenstellung (Figur 5a) bis in seine Offenstellung (Figur 5d) ist aus dem Bilderverlauf gemäß den Figuren 5a bis 5d erkennbar. Insbesondere ist hierbei erkennbar, dass der klappbare Bürstenteil 21 schwenkbeweglich oder drehbeweglich (Pfeil 28) an dem Türportal 1 befestigt ist. Das heißt, der schwenkbare Bürstenteil 21 ist durch das Gelenk 25 einerseits mit dem Türflügel respektive mit dem feststehenden Bürstenteil verbunden, und andererseits schwenkbeweglich mit dem Türportal 1 durch das Gelenk 28. Durch die Länge des Schwenkarmes 10 oder auch die Länge des abklappbaren Bürstenleistenteils und dessen Anlenkung an dem Türflügel ist vom Prinzip her die Fläche der Ausnehmung 6 vorgegeben. Wesentlich hierbei ist, dass der Schwenkarm außerhalb der Mittelängsachse 30 des Türflügels (Figur 1) in Richtung auf die Drehsäule 3 zu an dem Türflügel befestigt ist, da hierdurch erreicht wird, dass der Türflügel in der Weise in das Portal eingezogen wird, wie dies aus den Figuren 5a bis 5d erkennbar ist. Durch diese Schwenkbewegung wird insbesondere erreicht, dass die Ausnehmung 6 in ihrer Ausdehnung relativ klein gehalten werden kann, so dass noch ein genügend breiter Einstieg zwischen den beiden Ausnehmungen 6 im Einstieg verbleibt, in dem die Personen einsteigen können, ohne notwendigerweise in den Bereich der jeweiligen Ausnehmung 6 gelangen zu müssen.

## Patentansprüche

1. Boden (2) des Einstiegs eines Türportals (1) eines Busses oder eines schienengebundenen Fahrzeugs, wobei der Boden (2) zum Fahrzeuginnern (Pfeil 9) zu ansteigend ausgebildet ist, wobei zum Verschließen des Türportals eine ein- oder mehrflüglige Schwenktür vorgesehen ist, wobei der mindestens eine Türflügel der Schwenktür an einer Drehsäule (3) gelagert ist, wobei die Drehsäule mindestens einen Schwenkarm aufweist, wobei der mindestens eine Schwenkarm (10) unten am Türflügel (4), insbesondere an der Unterkante des Türflügels (4) angreift,
**dadurch gekennzeichnet,**
**dass** der Boden (2) des Einstiegs im Schwenkbereich des Türflügels (4) eine sich über die Oberseite des Bodens (2) erstreckende Ausnehmung (6) aufweist.

2. Vorrichtung nach Anspruch 1,
**dadurch gekennzeichnet,**
**dass** die Höhe der Ausnehmung (6) zum Fahrzeuginnern zunehmend ausgebildet ist, so dass die Oberfläche der Ausnehmung (6) im Wesentlichen waagerecht bzw. im rechten Winkel zur Drehsäule verlaufend ausgebildet ist.

3. Vorrichtung nach einem oder mehreren der vorangehenden Ansprüche,
**dadurch gekennzeichnet,**
**dass** der Verlauf der ansteigenden Kante (6a) der Ausnehmung (6) im Boden (2) in etwa dem Bewegungsverlauf des Schwenkarmes (10) des Türflügels (4) entspricht.

4. Vorrichtung nach einem oder mehreren der vorangehenden Ansprüche,
**dadurch gekennzeichnet,**
**dass** der Türflügel (4) an seiner Unterkante als Abschluss eine Bürstenleiste (20) aufweist.

5. Vorrichtung nach Anspruch 4 ,
**dadurch gekennzeichnet**
**dass** die Bürstenleiste (20) vertikal geteilt ausgebildet ist und der eine Bürstenleistenteil (21) im Bereich der Anlenkung des Schwenkarms (10) an dem Türflügel (4) um eine vertikale Achse (25) klappbar ausgebildet ist.

6. Vorrichtung nach Anspruch 4,
**dadurch gekennzeichnet,**
**dass** der klappbare Bürstenleistenteil (21) mit seinem äußeren Ende schwenkbeweglich am Türportal (1) des Wagenkastens befestigt ist.

7. Vorrichtung nach Anspruch 4,
**dadurch gekennzeichnet,**
**dass** der klappbare Teil des Bürstenleistenteils (21) nicht mit dem Türflügel (4) verbunden ist.

8. Vorrichtung nach Anspruch 4,
**dadurch gekennzeichnet,**
**dass** der Schwenkarm (10) außerhalb der Mittellängsachse (30) des Türflügels (4) in Richtung auf die Drehsäule (3) zu an dem Türflügel (4) angreift.

9. Vorrichtung nach Anspruch 4,
**dadurch gekennzeichnet,**
**dass** der Schwenkarm (10) drehbeweglich mit dem Türflügel (4) verbunden ist.
